(19) **Europäisches Patentamt**
**European Patent Office**
**Office européen des brevets**

(11) **EP 4 129 548 A1**

(12) **EUROPEAN PATENT APPLICATION**
published in accordance with Art. 153(4) EPC

(43) Date of publication:
**08.02.2023 Bulletin 2023/06**

(21) Application number: **21776654.2**

(22) Date of filing: **18.03.2021**

(51) International Patent Classification (IPC):
**B23H 7/10** (1985.01)

(52) Cooperative Patent Classification (CPC):
**B23H 7/10**

(86) International application number:
**PCT/JP2021/010973**

(87) International publication number:
**WO 2021/193323 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2020 JP 2020051994**

(71) Applicant: **FANUC CORPORATION
Oshino-mura
Minamitsuru-gun
Yamanashi 401-0597 (JP)**

(72) Inventors:
• **TODA, Yuuichi
Minamitsuru-gun, Yamanashi 401-0597 (JP)**
• **IRIE, Shouta
Minamitsuru-gun, Yamanashi 401-0597 (JP)**
• **WATANABE, Daiki
Minamitsuru-gun, Yamanashi 401-0597 (JP)**

(74) Representative: **Schmidt, Steffen J.
Wuesthoff & Wuesthoff
Patentanwälte PartG mbB
Schweigerstrasse 2
81541 München (DE)**

(54) **ESTIMATION METHOD AND CONTROL DEVICE FOR WIRE ELECTRICAL DISCHARGE MACHINE**

(57) Provided are an estimation method control device (16) for a wire electrical discharge machine (10) the method and device being for estimating the tension of a wire electrode (12) on the basis of information obtained from a motor (38) included in a feed mechanism (22) of the wire electrode (12). A control device (16) for a wire electrical discharge machine (10) provided with a first motor (38A) and a second motor (38B) that induce rotation of a first roller (32A) and a second roller (32B) for feeding a wire electrode (12), the control device (16) comprising: an acquisition unit (58) that acquires a noise load and/or a torque command from one of the first motor (38A) and the second motor (38B); a feed motor control unit (64) that controls the first motor (38A) and the second motor (38B) so that the wire electrode (12) is tensioned; and an estimation unit (60) that estimates the tension on the basis of the noise load and/or the torque command which is acquired by the acquisition unit at a time for the time when the wire electrode (12) is tensioned.

FIG. 3

**Description**

TECHNICAL FIELD

The present invention relates to a control device and an estimation method for a wire electrical discharge machine. In particular, the present invention relates to a control device and an estimation method for a wire electrical discharge machine configured to estimate the tension of a wire electrode of the wire electrical discharge machine.

BACKGROUND ART

A wire electrical discharge machine is generally equipped with a tension sensor that detects the tension of a wire electrode. As an example of such a tension sensor, for example, a "wire electrode tension sensor" is disclosed in JP 2002-340711 A.

SUMMARY OF THE INVENTION

In a general type of such a wire electrical discharge machine, the tension of the wire electrode is detected by a tension sensor. In this instance, it may be considered that, if it were possible to estimate the tension of the wire electrode without using a tension sensor, the tension sensor could be omitted from the configuration of the wire electrical discharge machine. Further, if the tension sensor could be omitted from the configuration of the wire electrical discharge machine, it would be considered advantageous in terms of simplifying the mechanical structure of the wire electrical discharge machine, and reducing the cost of constituent components.

Thus, the present invention has the object of providing a control device and an estimation method for a wire electrical discharge machine in which, based on information obtained from a motor included in a feeding mechanism for feeding a wire electrode, the tension of the wire electrode is estimated.

One aspect of the present invention is characterized by a control device for a wire electrical discharge machine equipped with a wire bobbin around which a wire electrode is wound, a first roller configured to feed the wire electrode that is wound around the wire bobbin toward an object to be machined by being rotated, a second roller configured to feed the wire electrode that has passed through the object to be machined to a collection box by being rotated, a first motor configured to rotate the first roller, and a second motor configured to rotate the second roller, the control device for the wire electrical discharge machine further including an acquisition unit configured to acquire at least one of a disturbance load or a torque command, the disturbance load being based on a drive current of a selected motor which is one of the motors selected from among the first motor and the second motor, the torque command causing the selected motor to rotate at a predetermined command speed, a feeding motor control unit configured to control the first motor and the second motor in a manner so that the wire electrode is placed under tension between the first roller and the second roller, and an estimation unit configured to estimate a tension of the tensioned wire electrode, based on at least one of the disturbance load or the torque command which is acquired by the acquisition unit at a time when the wire electrode is placed under tension between the first roller and the second roller.

Yet another aspect of the present invention is characterized by an estimation method for estimating a tension of a wire electrode in a wire electrical discharge machine equipped with a wire bobbin around which a wire electrode is wound, a first roller configured to feed the wire electrode that is wound around the wire bobbin toward an object to be machined by being rotated, a second roller configured to feed the wire electrode that has passed through the object to be machined to a collection box by being rotated, a first motor configured to rotate the first roller, and a second motor configured to rotate the second roller, wherein the wire electrode is placed under tension between the first roller and the second roller, the estimation method including a feeding motor control step of acquiring at least one of a disturbance load or a torque command of a selected motor which is one of the motors selected from among the first motor and the second motor, while controlling the first motor and the second motor in a manner so that the wire electrode is placed under tension between the first roller and the second roller, the disturbance load being based on a drive current of the selected motor, the torque command causing the selected motor to rotate at a predetermined command speed, and an estimation step of estimating the tension, based on at least one of the disturbance load or the torque command at a time when the wire electrode is placed under tension between the first roller and the second roller.

According to the aspects of the present invention, the control device and the estimation method for the wire electrical discharge machine are provided, in which based on information obtained from the motor included in the feeding mechanism for feeding the wire electrode, the tension of the wire electrode is estimated.

BRIEF DESCRIPTION OF THE DRAWINGS

FIG. 1 is a configuration diagram showing an overall configuration of a wire electrical discharge machine according to an embodiment of the present invention;

FIG. 2 is a simplified configuration diagram of a feeding mechanism for feeding a wire electrode provided in the wire electrical discharge machine according to the embodiment;

FIG. 3 is a simplified configuration diagram of a control device for the wire electrical discharge machine according to the embodiment;

FIG. 4 is a simplified configuration diagram of a wire bobbin around which the wire electrode is wound;

FIG. 5 is a flowchart showing a process flow of an estimation method according to the embodiment;

FIG. 6 is a graph illustrating a correlation between a disturbance load of a first motor, and a torque generated by a torque generating mechanism;

FIG. 7 is a schematic configuration diagram of a control device according to a second exemplary modification; and

FIG. 8 is a schematic configuration diagram of a control device according to a sixth exemplary modification.

DESCRIPTION OF THE INVENTION

A preferred embodiment in relation to a control device and an estimation method for a wire electrical discharge machine according to the present invention will be presented and described in detail below with reference to the accompanying drawings. However, it should be understood that explanation of well-known matters may be omitted herein.

[Embodiment]

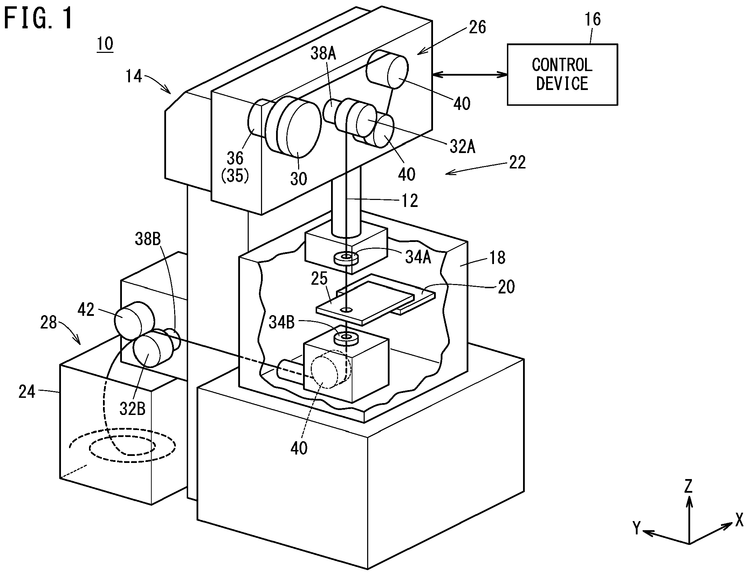

FIG. 1 is a configuration diagram showing an overall configuration of a wire electrical discharge machine 10 according to an embodiment. In FIG. 1, an X direction, a Y direction, and a Z direction which are indicated by the arrows are directions that are perpendicular to each other.

The wire electrical discharge machine 10 is a machine tool that carries out electrical discharge machining on an object to be machined 25 by causing an electrical discharge to be generated (in an inter-electrode space) between a wire electrode 12 and the object to be machined 25.

The wire electrical discharge machine 10 according to the present embodiment is equipped with a machine main body 14 and a control device 16. The machine main body 14 is a machine that executes electrical discharge machining by way of the wire electrode 12. The control device 16 is a device that controls the machine main body 14, which is also generally referred to as a numerical control device, and in the present embodiment in particular, the control device 16 serves to estimate the tension of the wire electrode 12.

Among these elements, the machine main body 14 comprises a work-pan 18, a support base 20, a feeding mechanism 22, and a collection box 24. The work-pan 18 is a tank in which a machining liquid is stored. The machining liquid is a liquid having a dielectric property, for example, deionized water. The support base 20 is a pedestal which, by being arranged inside the work-pan 18, is immersed in the machining liquid, and has a surface extending in the X direction and the Y direction. By such a surface, the support base 20 supports the object to be machined 25 within the machining liquid.

In connection with the support base 20, the wire electrical discharge machine 10 may further include a support base moving mechanism that causes the support base 20 to move along the X direction, the Y direction, and the Z direction. Although a detailed description thereof is omitted in the present embodiment, the support base moving mechanism is configured to include, for example, a plurality of servo motors.

The feeding mechanism 22 is a mechanism that delivers the wire electrode 12 along a feeding direction, in a manner so that the wire electrode 12 passes through the object to be machined 25 that is supported on the support base 20. Further, the collection box 24 serves to accommodate the wire electrode 12 after having passed through the object to be machined 25. Moreover, the "feeding direction" is defined as a direction toward a first roller 32A when viewed from a wire bobbin 30 to be described hereinafter, as a direction toward a second roller 32B when viewed from the first roller 32A, and as a direction toward the collection box 24 when viewed from the second roller 32B.

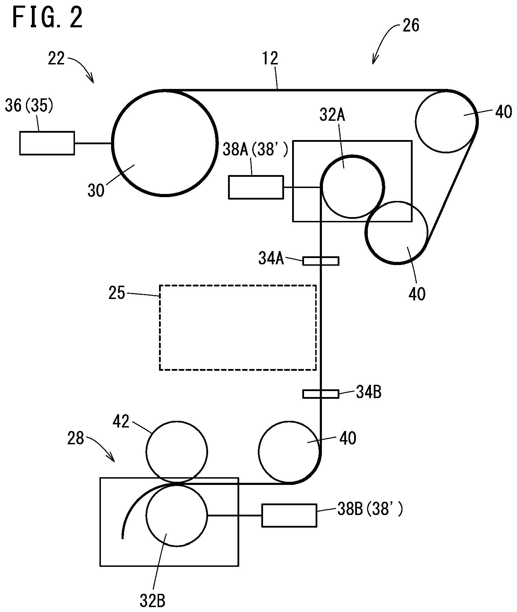

FIG. 2 is a simplified configuration diagram of the feeding mechanism 22 for feeding the wire electrode 12 that is provided in the wire electrical discharge machine 10 according to the embodiment.

A description will further be given concerning the feeding mechanism 22. The feeding mechanism 22 includes a supply system 26 that feeds the wire electrode 12 toward the object to be machined 25, and a recovery system 28 that feeds the wire electrode 12 after having passed through the object to be machined 25 toward the collection box 24.

The supply system 26 comprises the wire bobbin 30, the first roller 32A, a first die guide 34A, a torque generating mechanism 35, and a first motor 38A. The wire bobbin 30 is a rotatable bobbin around which the wire electrode 12 is wound in a manner so as to be capable of being drawn out therefrom. The first roller 32A is a rotatable roller over which the wire electrode 12 that is drawn out from the wire bobbin 30 is bridged. The first die guide 34A is a die guide that guides the wire electrode 12 from the first roller 32A toward the object to be machined 25, and is disposed inside the work-pan 18. The first motor 38A is a motor that causes the first roller 32A to rotate integrally with its own rotating shaft, and for example, is a servomotor that is connected to the first roller 32A.

The torque generating mechanism 35 is a mechanism that generates a torque of a predetermined magnitude, which is referred to as a "reverse torque" in the present embodiment, together with applying the torque to the wire bobbin 30. In this instance, the reverse torque is a torque in a direction opposite to a direction of rotation in which the wire electrode 12 is fed along the feeding direction. The torque generating mechanism 35 of the present embodiment includes a torque motor 36, and by the torque motor 36, the reverse torque is applied to the wire bobbin 30 at the predetermined magnitude. It should be noted that, insofar as the torque generating mechanism 35 is capable of generating a reverse torque of the predetermined magnitude, the configuration of the torque generating mechanism 35 is not limited to being a configuration that includes the torque motor 36.

A non-illustrated encoder is provided in the first motor 38A. Consequently, concerning the first motor 38A, the rotational speed of the rotating shaft thereof can be detected. Moreover, hereinafter, the term "rotation of the rotating shaft of the first motor 38A" may also simply be referred to as "rotation of the first motor 38A".

The foregoing describes the configuration of the supply system 26. As shown in FIG. 2, the supply system 26 may further include an auxiliary roller 40, which is a roller over which the wire electrode 12 is bridged between the wire bobbin 30 and the first roller 32A. The auxiliary roller 40 may be a single number, or a plural number of the auxiliary rollers 40 may be provided in the supply system 26. Further, the supply system 26 may include a non-illustrated first die guide moving mechanism that causes the first die guide 34A to move along a direction parallel to the X-Y plane of FIG. 1. Although a detailed description thereof is omitted in the present embodiment, the first die guide moving mechanism is configured to include, for example, a servo motor.

Subsequently, a description will be given concerning the configuration of the recovery system 28 of the feeding mechanism 22. The recovery system 28 is equipped with a second die guide 34B, the second roller 32B, a third roller 42, and a second motor 38B. The second die guide 34B is a die guide that guides the wire electrode 12 after having passed through the object to be machined 25, and is disposed inside the work-pan 18. Further, the second roller 32B and the third roller 42 are rotatable rollers that sandwich and hold therebetween the wire electrode 12 after having passed through the second die guide 34B. Among the rollers, the third roller 42 is a roller which is generally also referred to as a pinch roller, and in order to carry out gripping and releasing, is provided so as to be capable of being attached to and separated away with respect to the second roller 32B. The second motor 38B is a servo motor according to the present embodiment. A rotating shaft of the second motor 38B is connected to the second roller 32B. Consequently, when a drive current is supplied to the second motor 38B, the rotating shaft of the second motor 38B and the second roller 32B rotate together in an integral manner.

In the same manner as in the first motor 38A, an encoder is provided in the second motor 38B. The rotational speed of the rotating shaft of the second motor 38B is detected by the encoder that is provided in the second motor 38B. Moreover, hereinafter, in the same manner as in the first motor 38A and the torque motor 36, the term "rotation of the rotating shaft of the second motor 38B" may also simply be referred to as "rotation of the second motor 38B".

The foregoing describes the configuration of the recovery system 28. Moreover, in the same manner as in the supply system 26, the recovery system 28 may further include one or more auxiliary rollers 40. The auxiliary roller 40 provided in the recovery system 28, for example, is disposed between the second die guide 34B and the second roller 32B (and/or the third roller 42), and over which the wire electrode 12 is bridged. Further, the recovery system 28 may include a non-illustrated second die guide moving mechanism that causes the second die guide 34B to move along a direction parallel to the X-Y plane of FIG. 1. The second die guide moving mechanism is configured to include, for example, a servo motor, in the same manner as in the aforementioned first die guide moving mechanism.

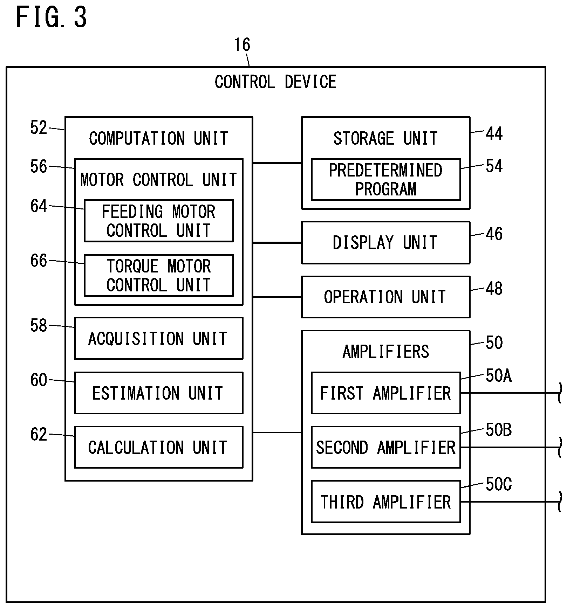

FIG. 3 is a simplified configuration diagram of the control device 16 for the wire electrical discharge machine 10 according to the present embodiment.

Subsequently, a description will be given concerning the configuration of the control device 16 for the wire electrical discharge machine 10. The control device 16 is equipped with a storage unit 44, a display unit 46, an operation unit 48, amplifiers 50, and a computation unit 52. The storage unit 44 serves to store information, and is constituted by hardware such as, for example, a RAM (Random Access Memory), a ROM (Read Only Memory), and the like. A predetermined program 54 for controlling the feeding mechanism 22 is stored in advance in the storage unit 44 of the present embodiment. The display unit 46 serves to display information, and for example, is a display device equipped with a liquid crystal screen. The operation unit 48 is operated by an operator in order to input information (instructions) to the control device 16, and is constituted, for example, by a keyboard, a mouse, or a touch panel (touchscreen) that is attached to a screen (liquid crystal screen) of the display unit 46.

The amplifiers 50 are servo amplifiers according to the present embodiment, and include a first amplifier 50A, a second amplifier 50B, and a third amplifier 50C. Among these members, the first amplifier 50A and the second amplifier 50B serve to feedback control the first motor 38A and the second motor 38B based on a command output from a later-described computation unit 52. Further, the third amplifier 50C serves to feedback control the torque motor 36 based on a command output from the computation unit 52.

The computation unit 52 processes information by performing arithmetic operations, and is constituted by hardware, for example, such as a CPU (Central Processing Unit), a GPU (Graphics Processing Unit), and the like. The computation unit 52 comprises a motor control unit 56, an acquisition unit 58, an estimation unit 60, and a calculation unit 62. These respective units can be realized by the computation unit 52 executing the predetermined program 54.

Hereinafter, a description will be given sequentially concerning each of such units that are provided in the computation unit 52. Moreover, in the following, when the aforementioned first motor 38A and the second motor 38B are described without being distinguished in particular, both of such members will be referred to simply as "feeding motors 38". Similarly, when the first roller 32A and the second roller 32B are described without being distinguished in particular, both of such members will be referred to simply as "feeding rollers 32".

The motor control unit 56 serves to control each of the feeding motors 38 and the torque motor 36 via the amplifiers 50, and includes a feeding motor control unit 64 and a torque motor control unit (torque generating mechanism control unit) 66 which will be described below.

From among the feeding motors 38 and the torque motor 36, the feeding motor control unit 64 serves to control the feeding motors 38. The feeding motor control unit 64 outputs commands with respect to the first amplifier 50A and the second amplifier 50B in order to cause the feeding motors 38 to rotate at a predetermined rotational speed. Hereinafter, the rotational speed indicated by such a command may also be referred to as a "command speed".

The feeding motor control unit 64 issues a command with respect to the first amplifier 50A to control the command speed (a first command speed) of the first motor 38A, and issues a command with respect to the second amplifier 50B to control the command speed (a second command speed) of the second motor 38B. Between the first command speed and the second command speed, the second command speed is of a higher speed. Accordingly, when each of the two feeding motors 38 is rotated at the command speed, the wire electrode 12 is drawn in from the first roller 32A toward the second roller 32B and the third roller 42, and the wire electrode is placed under tension between the first roller 32A and the second roller 32B.

However, in a state in which the wire electrode 12 is bridged between the first roller 32A and the second roller 32B, there is a concern that the rotational speed of the first motor 38A may exceed the first command speed when accompanied by the rotational speed of the second motor 38B. Further, there is a concern that the rotational speed of the second motor 38B may become less than the second command speed when accompanied by the rotational speed of the first motor 38A. Thus, the feeding motor control unit 64 outputs a command with respect to the first amplifier 50A and the second amplifier 50B, to thereby indicate the torque that is made to be generated by the first motor 38A and the second motor 38B. Hereinafter, this command, or alternatively, a torque indicated by such a command, may also be referred to as a "torque command".

The feeding motor control unit 64 outputs the torque command with respect to the first amplifier 50A, to thereby indicate a torque (a reverse torque) in a direction opposite to a direction of rotation in which the wire electrode 12 is fed along the feeding direction. Consequently, the first amplifier 50A is capable of causing the commanded reverse torque to be generated in the first motor 38A, and causing the rotational speed of the first motor 38A to be reduced to the first command speed. Further, the feeding motor control unit 64 outputs the torque command with respect to the second amplifier 50B, to thereby indicate a torque (hereinafter, for the sake of convenience, also referred to as a forward torque) in the direction of rotation in which the wire electrode 12 is fed along the feeding direction. Consequently, the second amplifier 50B is capable of causing the commanded forward torque to be generated in the second motor 38B, and causing the rotational speed of the second motor 38B to rise to the second command speed.

The torque motor control unit 66 outputs a torque command with respect to the third amplifier 50C indicating a reverse torque of a predetermined magnitude. The predetermined magnitude can be specified and changed by each of the other units provided in the computation unit 52, or alternatively, by the operator operating the operation unit 48. Hereinafter, the "reverse torque of a predetermined magnitude" may also simply be referred to as a "predetermined reverse torque". In accordance with the torque command output from the torque motor control unit 66, the third amplifier 50C is made to generate the predetermined reverse torque in the torque motor 36, and is capable of preventing the wire electrode 12 from being excessively fed out from the wire bobbin 30 while the wire bobbin 30 is being driven accompanying rotation of the feeding motors 38.

Next, a description will be given concerning the acquisition unit 58. According to the present embodiment, the acquisition unit 58 acquires from the amplifiers 50 a disturbance load based on the drive current of a selected motor 38', which is one of the two feeding motors 38. The selected motor 38' may be selected by a manufacturer of the wire electrical discharge machine 10 at a time of shipment, or may be appropriately selected by the operator at a time when the wire electrical discharge machine 10 is used.

Further, the disturbance load is a difference between a drive current when the selected motor 38' is rotated at the command speed in the case of not being affected by the influence of a disturbance, and a drive current when the selected motor 38' is rotated at the command speed in a case of being affected by the influence of a disturbance.

For example, it is assumed that the rotational speed of the first motor 38A deviates from the first command speed due to the disturbance. In this instance, as the disturbance, there are included a force received by the first motor 38A due to the reverse torque of the torque motor 36, a tension of the wire electrode 12, and a frictional force applied to the wire electrode 12 by the third roller 42. In this case, as noted previously, the first amplifier 50A adjusts the drive current based on the torque command. The disturbance load of the first motor 38A is obtained based on the drive current after having been subjected to such an adjustment.

Further, it is assumed that the rotational speed of the second motor 38B deviates from the second command speed due to the disturbance. In this instance, as the disturbance, there are included a force received by the second motor 38B due to the reverse torque of the torque motor 36, a tension of the wire electrode 12, and a frictional force applied to the wire electrode 12 by the third roller 42. In this case, as noted previously, the second amplifier 50B adjusts the drive current based on the torque command. The disturbance load of the second motor 38B is obtained based on the drive current after having been subjected to such an adjustment.

The estimation unit 60 serves to estimate the tension of the wire electrode 12 based on the disturbance load acquired by the acquisition unit 58 when the wire electrode 12 is placed under tension. More specifically, in the estimation unit 60 according to the present embodiment, the tension is estimated based on a difference $D_1$ between the disturbance load at a time when the wire electrode 12 is placed under tension while being fed between the two feeding rollers 32, and a predetermined load that is determined in advance.

The predetermined load is a disturbance load of the selected motor 38' in the case that the tension of the wire electrode 12 between the two feeding rollers 32 has become zero. Such a condition, for example, can be acquired when the wire electrode 12 is made to bend between the first roller 32A and the second roller 32B by controlling the rotational speed of the feeding motors 38. It should be noted that the predetermined load is not limited to being acquired at a time when the wire electrode 12 is made to bend, but can also be acquired at a time when the wire electrode 12, which is being tensioned between the first roller 32A and the second roller 32B, is disconnected. Further, such a condition can also be acquired at a time when gripping of the wire electrode 12 between the second roller 32B and the third roller 42 is released.

More specifically, the predetermined load is indicative of the magnitude of the disturbance load generated by a disturbance other than the tension of the wire electrode 12, from among the disturbances received by the selected motor 38'. In addition, the difference D1, which is obtained by using such a disturbance load as the predetermined disturbance load, is indicative of the magnitude of the disturbance load generated only due to the tension of the wire electrode 12. Accordingly, by obtaining the difference D1, it is possible for the estimation unit 60 to easily and accurately estimate the magnitude of the tension of the wire electrode 12.

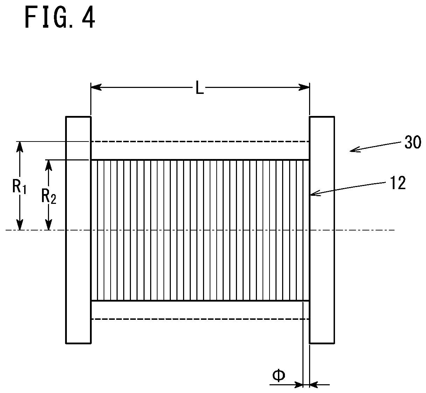

FIG. 4 is a simplified configuration diagram of the wire bobbin 30 around which the wire electrode 12 is wound. It should be noted that FIG. 2 is a viewpoint as seen from the left side in the figure of FIG. 4.

Next, a description will be given concerning the calculation unit 62. The calculation unit 62 serves to calculate a radius $R_2$ of the wire bobbin 30 including the wire electrode 12 wound thereon based on a feed amount by which the wire electrode 12 is fed. More specifically, the calculation unit 62 according to the present embodiment serves to sequentially perform a calculation by the following equation (1). Moreover, in the following equation (1), $R_1$ is an initial value of the radius $R_2$, $\varphi$ is a wire diameter of the wire electrode 12, and W is a wire length of the wire electrode 12 which has already been fed from the wire bobbin 30 (by the aforementioned feed amount). Further, a is a void ratio of the wire electrode 12 that is wound around the wire bobbin 30, and is a volume ratio of the void with respect to a total volume of the wire electrode 12 in which there is included an inter-wire spacing of the wire electrode 12, and a void generated between the wire electrode 12 and the wire bobbin 30. L is a width perpendicular to the diametrical direction of the wire bobbin 30. Among these values, $R_1$, $\varphi$, a, and L are known values, and are capable of being specified in advance by the operator via the operation unit 48. Concerning $R_1$, this value may also be obtained by substituting the predetermined load ($F_M$) obtained by setting the tension of the wire electrode 12 to zero, and the reverse torque ($T_{35}$) at that time into the later-described equation (2). Further, the wire length W can be indirectly calculated from the rotational speed of the wire bobbin 30, and can also be calculated from the rotational speed of the first motor 38A and the diameter of the first roller 32A, or from the rotational speed of the second motor 38B and the diameter of the second roller 32B. Equation (1), when described simply, is merely indicative of the radius $R_2$ of the wire bobbin 30 gradually becoming smaller accompanying the wire electrode 12 being fed out.

$$R_2 = \sqrt{R_1^2 - (\varphi/2)^2 \cdot W \cdot (1+a) \cdot L^{-1}} \qquad (R_1 \geq R_2 > 0) \qquad \cdots \ (1)$$

The radius $R_2$ of the wire bobbin 30 determined by equation (1) includes a relationship, which is expressed by the following equation (2), between the reverse torque ($T_{35}$) of the torque generating mechanism 35, and the disturbance load ($F_M$) generated due to a disturbance other than the tension of the wire electrode 12.

$$F_M = T_{35}/R_2 \qquad \cdots \ (2)$$

Equation (2) indicates that there is a concern that, if the magnitude of the reverse torque of the torque generating mechanism 35 were to be held constant, the magnitude of the disturbance load due to the disturbance other than the tension would undergo a change in response to a change in the radius $R_2$, and may deviate from the predetermined load. Thus, according to the present embodiment, the magnitude of the reverse torque of the torque generating mechanism 35 is adjusted on the basis of equation (2), in a manner so that, irrespective of the radius $R_2$ of the wire bobbin 30, the disturbance load generated by the disturbance other than the tension coincides with the predetermined load. According to the present embodiment, the magnitude of the reverse torque can be easily and accurately adjusted by controlling the torque motor 36 of the torque generating mechanism 35.

More specifically, according to the present embodiment, the calculation unit 62 calculates the radius $R_2$ of the wire bobbin 30 based on equation (1), and furthermore, based on equation (2), calculates the magnitude of the reverse torque corresponding to the radius $R_2$ and the predetermined load. Further, the calculation unit 62 sequentially notifies the torque motor control unit 66 of the calculated reverse torque. Based on the notified reverse torque, the torque motor control unit 66 controls the torque motor 36 of the torque generating mechanism 35. Consequently, it is possible to prevent the predetermined load used by the estimation unit 60 in performing the estimation, and the disturbance load generated by the disturbance other than the tension from deviating from each other.

The above is an example of the configuration of the control device 16 according to the present embodiment. Next, a description will be given concerning an estimation method, which is executed by the above-described control device 16 for estimating the tension of the wire electrode 12.

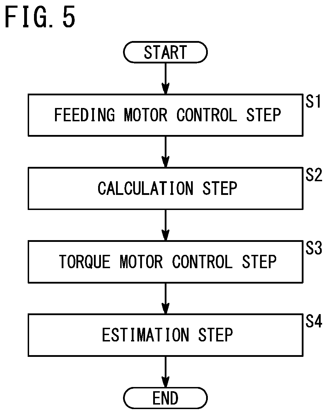

FIG. 5 is a flowchart showing a process flow of the estimation method according to the present embodiment.

In the estimation method according to the present embodiment, as shown in FIG. 5, at first, a feeding motor control step is performed. The feeding motor control step is a step of acquiring the disturbance load based on the drive current of the selected motor 38', while controlling the first motor 38A and the second motor 38B in a manner so that the wire electrode 12 is placed under tension between the first roller 32A and the second roller 32B. The present step can be executed by a collaborative operation between the feeding motor control unit 64 and the acquisition unit 58.

Further, in the estimation method according to the embodiment, a calculation step and a torque motor control step (torque generating mechanism control step) are further performed. Among these steps, the calculation step is a step of sequentially calculating, based on the feed amount W of the wire electrode 12, the radius $R_2$ of the wire bobbin 30, and the magnitude of the reverse torque of the torque generating mechanism 35 corresponding to the radius $R_2$. The present step is executed by the calculation unit 62.

The torque motor control step (torque generating mechanism control step) is a step of sequentially adjusting the reverse torque of the torque motor 36 (the torque generating mechanism 35) on the basis of the calculation result in the calculation step. The present step is executed by the torque motor control unit 66 by issuing a notification to the torque motor control unit 66 of the result of the calculation carried out by the calculation unit 62 in the calculation step. By the present step, the magnitude of the disturbance load generated by the disturbance other than the tension in the disturbance load of the first motor 38A is sequentially adjusted so as to become the predetermined load.

The estimation step is a step of estimating the tension of the wire electrode 12 based on the acquired disturbance load. The present step is executed by the estimation unit 60. As noted previously, the estimation unit 60 according to the present embodiment estimates the tension based on the difference D1 between the disturbance load and the predetermined load.

By executing the estimation method as described above, the control device 16 is capable of easily estimating the tension of the wire electrode 12. Further, in the case that the estimated tension is deviated beyond an allowable range with respect to the tension required in order to perform the electrical discharge machining accurately, it can be determined that an abnormality has occurred in relation to the placement of the wire electrode 12 under tension.

In this manner, according to the present embodiment, the control device 16 and the estimation method for the wire electrical discharge machine 10 are provided, in which based on information obtained from the feeding motors 38 included in the feeding mechanism 22 for feeding the wire electrode 12, the tension of the wire electrode 12 is estimated.

According to the control device 16 of the present embodiment, it is not necessary for the wire electrical discharge machine 10 to be equipped with a tension sensor to detect the tension of the wire electrode 12. Therefore, according to the control device 16 of the present embodiment, the tension sensor can be omitted, and accordingly the mechanical structure of the wire electrical discharge machine 10 is simplified, made smaller in scale, and the cost of constituent components is reduced, advantageously.

[Modifications]

The embodiment has been described above as one example of the present invention. It goes without saying that various modifications or improvements are capable of being added to the above-described embodiment. Further, it is clear from the scope of the claims that other modes to which such modifications or improvements have been added can be included within the technical scope of the present invention.

(Exemplary Modification 1)

The control device 16 and the estimation method described in the embodiment serve to estimate the tension on the basis of the disturbance load of the feeding motors 38. Without being limited to this feature, the control device 16 and the estimation method may estimate the tension of the wire electrode 12 on the basis of the torque command instead of the disturbance load.

More specifically, the estimation unit 60 may estimate the tension of the selected motor 38' based on the difference $D'_1$ between the torque command when the wire electrode 12 is placed under tension, and the predetermined torque command that is determined in advance. The predetermined torque command is a torque command for the selected motor 38', at a time when the wire electrode has become bent, at a time when the wire electrode 12 has broken (or has been disconnected), or in the case that the third roller 42 has separated away from the wire electrode 12.

The tension of the wire electrode 12 increases as the difference $D'_1$ becomes larger. Therefore, according to the present modification, the change in the tension of the wire electrode 12 can be estimated from the change in the difference $D'_1$.

(Exemplary Modification 2)

In the case that the rotational speed of the feeding motors 38 is constant, the predetermined load can also be obtained as a difference $D_2$ between the disturbance load of the selected motor 38' when the reverse torque of the torque generating mechanism 35 is of the predetermined magnitude, and the disturbance load of the selected motor 38' when the reverse torque of the torque generating mechanism 35 is zero. Moreover, in the present exemplary modification, the term "the rotational speed of the feeding motor 38 is constant" implies that the rotational speed of the first motor 38A is constant at the first command speed, and the rotational speed of the second motor 38B is constant at the second command speed. As has been described in the embodiment, between the first command speed and the second command speed, the second command speed is of a higher speed.

In the case of determining the difference $D_2$, apart from the disturbance load of the selected motor 38' when the reverse torque of the torque generating mechanism 35 is of a predetermined magnitude, it is necessary to determine in advance the disturbance load of the selected motor 38' when the reverse torque of the torque generating mechanism 35 is zero. In this instance, as will be explained below, the disturbance load of the selected motor 38' when the reverse torque of the torque generating mechanism 35 is zero can be estimated from a correlation (first correlation) between the disturbance load of the selected motor 38' and the torque of the torque generating mechanism 35.

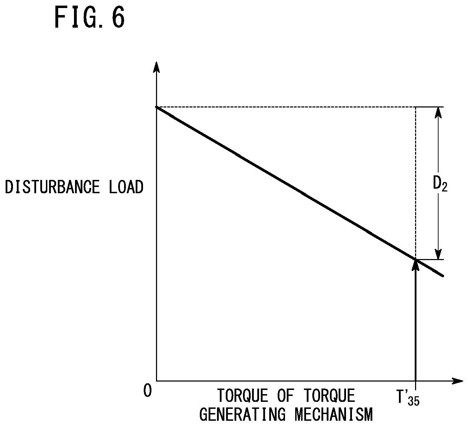

FIG. 6 is a graph illustrating a correlation between the disturbance load of the selected motor 38', and the torque (reverse torque) generated by the torque generating mechanism 35. Moreover, in FIG. 6, a correlation in the case that the selected motor 38' is the first motor 38A is illustrated, and the predetermined magnitude of the reverse torque generated by the torque generating mechanism 35 is shown by "$T'_{35}$".

As shown in FIG. 6, the above-described correlation can be expressed in the form of a straight line, by setting the disturbance load (the disturbance load of the selected motor 38') on the vertical axis, and setting the torque (the reverse torque) of the torque generating mechanism 35 on the horizontal axis.

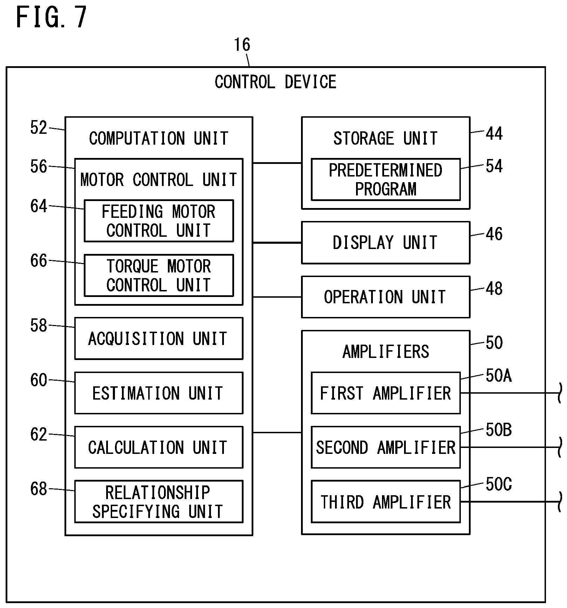

FIG. 7 is a schematic configuration diagram of the control device 16 according to a second exemplary modification.

As shown in FIG. 7, the control device 16 according to the present exemplary modification differs from that of the embodiment, in that a relationship specifying unit 68 is further provided. The relationship specifying unit 68 serves to specify the aforementioned correlation (the straight line shown in FIG. 6). More specifically, the relationship specifying unit 68 first obtains the slope of the straight line which indicates the correlation, and thereafter, specifies the correlation by identifying the straight line shown in FIG. 6 based on such a slope.

In order to obtain the slope of the straight line, the relationship specifying unit 68 issues a command with respect to the torque generating mechanism control unit (the torque motor control unit) 66 to cause a reverse torque of a first magnitude to be generated by the torque generating mechanism 35 (the torque motor 36). Further, the relationship specifying unit 68 issues a command with respect to the acquisition unit 58 to acquire the disturbance load of the selected motor 38' at that time. Moreover, the first magnitude, which is the magnitude of the reverse torque at this time, need not necessarily be of the predetermined magnitude at the time when the wire electrode 12 is fed, or need not necessarily be zero.

Next, the relationship specifying unit 68 issues a command with respect to the torque generating mechanism control unit 66 to cause a reverse torque of a second magnitude to be generated by the torque generating mechanism 35. Further, the relationship specifying unit 68 issues a command with respect to the acquisition unit 58 to acquire the disturbance load of the selected motor 38' at that time. Moreover, the second magnitude, which is the magnitude of the reverse torque at this time, may be adequate if the second magnitude is different from the first magnitude, and the second magnitude need not necessarily be of the predetermined magnitude at the time when the wire electrode 12 is fed, or need not necessarily be zero.

In addition, the relationship specifying unit 68 obtains the slope of the straight line in FIG. 6 based on the first magnitude and the second magnitude that were commanded to the torque generating mechanism control unit 66, and the two disturbance loads acquired by the acquisition unit 58. More specifically, as is generally well known, the slope of the straight line is the amount of change on the vertical axis with respect to the amount of change on the horizontal axis. In the case of the present exemplary modification, the amount of change on the horizontal axis is the difference between the first magnitude and the second magnitude that were commanded to the torque generating mechanism control unit 66. Further, the amount of change on the vertical axis is the difference between the disturbance load of the selected motor 38' when the reverse torque of the torque generating mechanism 35 is of the first magnitude, and the disturbance load of the selected motor 38' when the reverse torque of the torque generating mechanism 35 is of the second magnitude.

Assuming that the slope is determined, the straight line in FIG. 6, which is indicative of the correlation, can be easily specified. Further, if the straight line indicative of the correlation is specified, the difference $D_2$ can be easily obtained. By estimating the predetermined load on the basis of the difference $D_2$, based on such a predetermined load, the estimation unit 60 is capable of easily estimating the tension of the wire electrode 12.

In the foregoing manner, according to the present exemplary modification, the estimation unit 60 is capable of estimating the tension, based on the predetermined load, which is obtained without causing the wire electrode 12 to undergo bending or disconnection, and the disturbance load of the selected motor 38' at the time when the wire electrode 12 is placed under tension.

(Exemplary Modification 3)

Exemplary Modification 2 can also be applied to a case in which the tension is estimated based on the torque command. Moreover, in such a case, since it may be considered that the "disturbance load" in Exemplary Modification 2 is replaced by the "torque command", the "predetermined load" is replaced by the "predetermined torque command", the "first correlation" is replaced by the "second correlation", and the "difference $D_2$" is replaced by the "difference $D'_2$", respectively, the description of these terms is omitted herein.

According to the present exemplary modification, the estimation unit 60 is capable of estimating the tension, based on the predetermined torque command, which is obtained without causing the wire electrode 12 to undergo bending or disconnection, and the torque command of the selected motor 38' at the time when the wire electrode 12 is placed under tension.

(Exemplary Modification 4)

In the embodiment, it has been described that the reverse torque of the torque generating mechanism 35 is adjusted in accordance with a change in the radius $R_2$ of the wire bobbin 30. Without being limited to this feature, the reverse torque of the torque generating mechanism 35 may be set to a constant at a predetermined magnitude, and the predetermined load or the predetermined torque command may be adjusted in accordance with the change in the radius $R_2$ of the wire bobbin 30.

More specifically, the magnitude of the predetermined load in accordance with the radius $R_2$ of the wire bobbin 30 at the time when the reverse torque of the torque generating mechanism 35 is constant can be sequentially calculated by Equation (2). By sequentially updating the predetermined load based on the calculation result of the calculation unit 62, in the same manner as in the embodiment, it is possible to prevent the predetermined load used by the estimation unit 60 in performing the estimation, and the disturbance load generated by the disturbance other than the tension from deviating from each other. Consequently, the estimation unit 60 is capable of accurately estimating the tension of the wire electrode 12 based on the predetermined load.

(Exemplary Modification 5)

Up until this point, in the embodiment and each of the exemplary modifications, a description has been given in which the acquisition unit 58 acquires either a disturbance load or a torque command, and based on the acquired disturbance load or the torque command, the estimation unit 60 estimates the tension. Without being limited to this feature, the acquisition unit 58 may acquire both the disturbance load and the torque command. Further, the estimation unit 60 may estimate the tension based on each of the acquired disturbance load and the torque command. The estimation method in this case may be appropriately selected from among the estimation methods described in the embodiment and the exemplary modifications 1 to 4.

According to the present exemplary modification, it is possible to obtain the tension which is estimated based on the disturbance load, and the tension which is estimated based on the torque command. The estimation unit 60 determines an average value of the plurality of tensions that have been estimated as its own estimation result. Consequently, even if either one of the tension estimated based on the disturbance load or the tension estimated based on the torque command is affected by noise, the influence of such noise on the tension obtained as the estimation result can be reduced.

(Exemplary Modification 6)

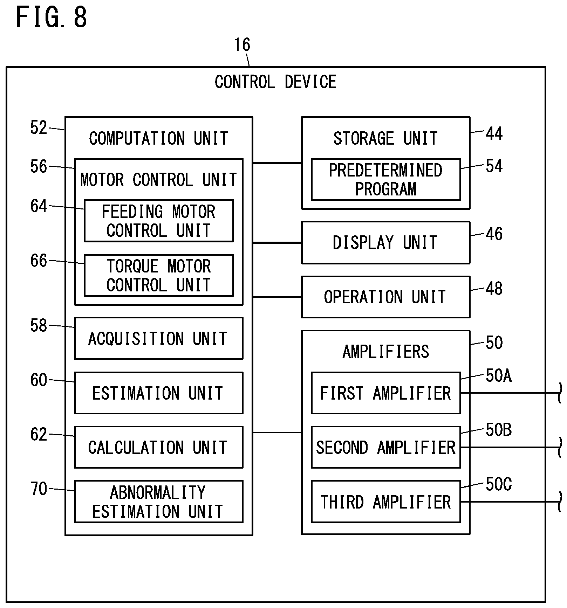

FIG. 8 is a simplified configuration diagram of the control device 16 according to a sixth exemplary modification.

In connection with Exemplary Modification 5, the control device 16 may further be equipped with an abnormality estimation unit 70. In the case that the tensions are respectively estimated from the disturbance load and the torque command, the abnormality estimation unit 70 serves to determine whether or not a deviation between the tensions based respectively on the disturbance load and the torque command has exceeded a predetermined range. By such a determination, for example, in the case that the deviation has exceeded the predetermined range, the abnormality estimation unit 70 estimates that there is a possibility that a malfunction may have occurred in the wire electrical discharge machine 10.

Consequently, not only can the tension be estimated, but based on such an estimated tension, it is possible to estimate whether or not there is a possibility that a malfunction has occurred in the wire electrical discharge machine 10.

Furthermore, by continuously monitoring the transitioning of such a deviation, the abnormality estimation unit 70 may further estimate the cause of the deviation having exceeded the predetermined range. For example, if the deviation which has exceeded the predetermined range is only temporary, the abnormality estimation unit 70 estimates that the deviation is simply due to the influence of noise. Further, if the deviation which has exceeded the predetermined range behaves in a continuous manner, it is estimated that a failure part exists in the wire electrical discharge machine 10.

According to the present exemplary modification, it becomes easy to perform maintenance on the wire electrical discharge machine 10. Moreover, in the present exemplary modification, an abnormality may be estimated based on a deviation between the tension estimated by one, and the tension estimated by another one of the first motor 38A and the second motor 38B. In this case, from among the first motor 38A and the second motor 38B, at least one of the disturbance load and the torque command thereof, which is not that of the selected motor 38', becomes necessary. Such a feature may be realized by having the acquisition unit 58 further acquire at least one of the disturbance load and the torque command of the feeding motor 38 that is not the selected motor 38'.

(Exemplary Modification 7)

The above-described embodiment and the modifications thereof may be arbitrarily combined within a range in which no technical inconsistencies occur.

[Inventions That Can Be Obtained from the Embodiment]

The inventions that can be grasped from the above-described embodiment and the modifications thereof will be described below.

<First Invention>

The control device (16) for the wire electrical discharge machine (10) is equipped with the wire bobbin (30) around which the wire electrode (12) is wound, the first roller (32A) configured to feed the wire electrode (12) that is wound around the wire bobbin (30) toward the object to be machined (25) by being rotated, the second roller (32B) configured to feed the wire electrode (12) that has passed through the object to be machined (25) to the collection box (24) by being rotated, the first motor (38A) configured to rotate the first roller (32A), and the second motor (38B) configured to rotate the second roller (32B), and further includes the acquisition unit (58) configured to acquire at least one of the disturbance load or the torque command, the disturbance load being based on the drive current of the selected motor (38') which is one of the motors selected from among the first motor (38A) and the second motor (38B), the torque command causing the selected motor to rotate at the predetermined command speed, the feeding motor control unit (64) configured to control the first motor (38A) and the second motor (38B) in a manner so that the wire electrode (12) is placed under tension between the first roller (32A) and the second roller (32B), and the estimation unit (60) configured to estimate the tension of the tensioned wire electrode (12) based on at least one of the disturbance load or the torque command which is acquired by the acquisition unit (58) at the time when the wire electrode (12) is placed under tension between the first roller (32A) and the second roller (32B).

In accordance with such features, the control device (16) for the wire electrical discharge machine (10) is provided in which, based on the information obtained from the motor (38') included in the feeding mechanism (22) for feeding the wire electrode (12), the tension of the wire electrode (12) is estimated.

The estimation unit (60) may estimate the tension based on at least one of the difference (D1) between the disturbance load at the time when the wire electrode (12) is placed under tension and the predetermined load that is determined in advance, or the difference ($D'_1$) between the torque command at the time when the wire electrode (12) is placed under tension and the predetermined torque command that is determined in advance. In accordance with these features, the tension is easily and accurately estimated.

The predetermined load may be the disturbance load of the selected motor (38') for the case in which the first motor (38A) and the second motor (38B) are rotated in a manner so that the wire electrode (12) becomes bent between the first roller (32A) and the second roller (32B), and the predetermined torque command may be the torque command of the selected motor (38') for the case in which the first motor (38A) and the second motor (38B) are rotated in a manner so that the wire electrode (12) becomes bent between the first roller (32A) and the second roller (32B). In accordance with these features, the tension is easily and accurately estimated.

The predetermined load may be the disturbance load of the selected motor (38') for the case in which the wire electrode (12), which is being fed while being tensioned between the first roller (32A) and the second roller (32B), is disconnected, and the predetermined torque command may be the torque command of the selected motor (38') for the case in which the wire electrode (12), which is being fed while being tensioned between the first roller (32A) and the second roller (32B), is disconnected. In accordance with these features, the tension is easily and accurately estimated.

The wire electrical discharge machine (10) may further include the pinch roller (42) configured to apply the frictional force to the wire electrode (12) by gripping the wire electrode (12) together with the second roller (32B), the predetermined load may be the disturbance load of the selected motor (38') for the case in which the pinch roller (42) is separated away from the wire electrode (12) which is being fed while being tensioned, and the predetermined torque command may be the torque command of the selected motor (38') for the case in which the pinch roller (42) is separated away from the wire electrode (12) which is being fed while being tensioned. In accordance with these features, the tension is easily and accurately estimated.

The wire electrical discharge machine (10) may further include the torque generating mechanism (35) connected to the wire bobbin (30), and configured to generate the reverse torque of the predetermined magnitude, which is the torque in the direction opposite to the direction of rotation in which the wire electrode (12) is fed out in the feeding direction. In the case that each of the first motor (38A) and the second motor (38B) rotates at the constant rotational speed, the predetermined load may be the difference ($D_2$) between the disturbance load of the selected motor (38') when the reverse torque of the torque generating mechanism (35) is of the predetermined magnitude, and the disturbance load of the selected motor (38') when the reverse torque of the torque generating mechanism (35) is zero, and in the case that each of the first motor (38A) and the second motor (38B) rotates at the constant rotational speed, the predetermined torque command may be the difference ($D'_2$) between the torque command of the selected motor (38') when the reverse torque of the torque generating mechanism (35) is of the predetermined magnitude, and the torque command of the selected motor (38') when the reverse torque of the torque generating mechanism (35) is zero. In accordance with these features, the tension is easily and accurately estimated.

In the first invention, there may further be provided the relationship specifying unit (68) configured to specify at least one of the first correlation, which is the correlation between the disturbance load and the reverse torque, or the second correlation, which is the correlation between the torque command and the reverse torque. The relationship specifying unit (68) may specify the first correlation based on the disturbance load of the selected motor (38') when the reverse torque of the torque generating mechanism (35) is of the first magnitude, and the disturbance load of the selected motor (38') when the reverse torque of the torque generating mechanism (35) is of the second magnitude, and may specify the second correlation based on the torque command of the selected motor (38') when the reverse torque of the torque generating mechanism (35) is of the first magnitude, and the torque command of the selected motor (38') when the reverse torque of the torque generating mechanism (35) is of the second magnitude, based on the first correlation, the estimation unit (60) may estimate the difference ($D_2$) between the disturbance load of the selected motor (38') when the reverse torque of the torque generating mechanism (35) is of the predetermined magnitude, and the disturbance load of the selected motor (38') when the reverse torque of the torque generating mechanism (35) is zero, and based on the second correlation, may estimate the difference ($D'_2$) between the torque command of the selected motor (38') when the reverse torque of the torque generating mechanism (35) is of the predetermined magnitude, and the torque command of the selected motor (38') when the reverse torque of the torque generating mechanism (35) is zero. In accordance with these features, the predetermined load and the predetermined torque command can be obtained without causing bending or disconnection of the wire electrode (12) .

In the first invention, there may further be provided the calculation unit (62) configured to successively calculate the radius ($R_2$) of the wire bobbin (30) including the wire electrode (12) wound thereon based on the amount by which the wire electrode (12) is fed, and the torque generating mechanism control unit (66) configured to successively adjust the predetermined load and the predetermined torque command to a constant magnitude by changing the predetermined torque of the torque generating mechanism (35) in accordance with the calculated radius ($R_2$). In accordance with these features, the estimation unit (60) can continue to accurately estimate the tension of the wire electrode (12) while maintaining the predetermined load and the predetermined torque command constant.

In the first invention, there may further be provided the calculation unit (62) configured to calculate the radius ($R_2$) of the wire bobbin (30) including the wire electrode (12) wound thereon based on the amount by which the wire electrode (12) is fed, and to successively calculate the predetermined load and the predetermined torque command in accordance with the calculated radius ($R_2$). In accordance with this feature, the estimation unit (60) can continuously estimate the tension of the wire electrode (12) with high accuracy while maintaining the reverse torque of the torque generating mechanism (35) at the predetermined magnitude.

The acquisition unit (58) may acquire two from among the disturbance load and the torque command of the first motor (38A), and the disturbance load and the torque command of the second motor (38B), the estimation unit (60) may estimate the tension based on one, and may further estimate the tension based on another one from among the disturbance load and the torque command of the first motor (38A), and the disturbance load and the torque command of the second motor (38B) that were acquired, and in the first invention, there may further be provided the abnormality estimation unit (70) configured to estimate whether or not an abnormality has occurred, based on whether or not a deviation between the two tensions estimated by the estimation unit (60) has exceeded the predetermined threshold value. In accordance with these features, it is possible to estimate whether or not an abnormality has occurred on the basis of the estimated tension.

<Second Invention>

In the estimation method for estimating the tension of the wire electrode (12) in the wire electrical discharge machine (10) equipped with the wire bobbin (30) around which the wire electrode (12) is wound, the first roller (32A) configured to feed the wire electrode (12) that is wound around the wire bobbin (30) toward the object to be machined (25) by being rotated, the second roller (32B) configured to feed the wire electrode (12) that has passed through the object to be machined (25) to the collection box (24) by being rotated, the first motor (38A) configured to rotate the first roller (32A), and the second motor (38B) configured to rotate the second roller (32B), wherein the wire electrode (12) is placed under tension between the first roller (32A) and the second roller (32B), the estimation method includes the feeding motor control step of acquiring at least one of the disturbance load or the torque command of the selected motor (38') which is one of the motors selected from among the first motor (38A) and the second motor (38B), while controlling the first motor (38A) and the second motor (38B) in a manner so that the wire electrode (12) is placed under tension between the first roller (32A) and the second roller (32B), the disturbance load being based on the drive current of the selected motor, the torque command causing the selected motor to rotate at the predetermined command speed, and the estimation step of estimating the tension, based on at least one of the disturbance load or the torque command at the time when the wire electrode (12) is placed under tension between the first roller (32A) and the second roller (32B).

In accordance with such features, the estimation method is provided in which, based on the information obtained from the motor (38') included in the feeding mechanism (22) for feeding the wire electrode (12), the tension of the wire electrode (12) is estimated.

In the estimation step, there may be estimated the tension based on at least one of the difference (D1) between the disturbance load at the time when the wire electrode (12) is placed under tension and the predetermined load that is determined in advance, or the difference ($D'_1$) between the torque command at the time when the wire electrode (12) is placed under tension and the predetermined torque command that is determined in advance. In accordance with these features, the tension is easily and accurately estimated.

The predetermined load may be the disturbance load of the selected motor (38') for the case in which the first motor (38A) and the second motor (38B) are rotated in a manner so that the wire electrode (12) becomes bent between the first roller (32A) and the second roller (32B), and the predetermined torque command may be the torque command of the selected motor (38') for the case in which the first motor (38A) and the second motor (38B) are rotated in a manner so that the wire electrode (12) becomes bent between the first roller (32A) and the second roller (32B). In accordance with these features, the tension is easily and accurately estimated.

The predetermined load may be the disturbance load of the selected motor (38') for the case in which the wire electrode (12), which is being fed while being tensioned between the first roller (32A) and the second roller (32B), is disconnected, and the predetermined torque command may be the torque command of the selected motor (38') for the case in which the wire electrode (12), which is being fed while being tensioned between the first roller (32A) and the second roller (32B), is disconnected. In accordance with these features, the tension is easily and accurately estimated.

The wire electrical discharge machine (10) may further include the pinch roller (42) configured to apply the frictional force to the wire electrode (12) by gripping the wire electrode (12) together with the second roller (32B), the predetermined load may be the disturbance load of the selected motor (38') for the case in which the pinch roller (42) is separated away from the wire electrode (12) which is being fed while being tensioned, and the predetermined torque command may be the torque command of the selected motor (38') for the case in which the pinch roller (42) is separated away from the wire electrode (12) which is being fed while being tensioned. In accordance with these features, the tension is easily and accurately estimated.

The wire electrical discharge machine (10) may further include the torque generating mechanism (35) connected to the wire bobbin (30), and configured to generate the reverse torque of the predetermined magnitude, which is the torque in the direction opposite to the direction of rotation in which the wire electrode (12) is fed out in the feeding direction. In the case that each of the first motor (38A) and the second motor (38B) rotates at the constant rotational speed, the predetermined load may be the difference $(D_2)$ between the disturbance load of the selected motor (38') when the reverse torque of the torque generating mechanism (35) is of the predetermined magnitude, and the disturbance load of the selected motor (38') when the reverse torque of the torque generating mechanism (35) is zero, and in the case that each of the first motor (38A) and the second motor (38B) rotates at the constant rotational speed, the predetermined torque command may be the difference $(D'_2)$ between the torque command of the selected motor (38') when the reverse torque of the torque generating mechanism (35) is of the predetermined magnitude, and the torque command of the selected motor (38') when the reverse torque of the torque generating mechanism (35) is zero. In accordance with these features, the tension is easily and accurately estimated.

In the second invention, there may further be included the relationship specifying step of specifying at least one of the first correlation, which is the correlation between the disturbance load and the reverse torque, or the second correlation, which is the correlation between the torque command and the reverse torque. In the relationship specifying step, there may be specified the first correlation based on the disturbance load of the selected motor (38') when the reverse torque of the torque generating mechanism (35) is of the first magnitude, and the disturbance load of the selected motor (38') when the reverse torque of the torque generating mechanism (35) is of the second magnitude, and may specify the second correlation based on the torque command of the selected motor (38') when the reverse torque of the torque generating mechanism (35) is of the first magnitude, and the torque command of the selected motor (38') when the reverse torque of the torque generating mechanism (35) is of the second magnitude, based on the first correlation, in the estimation step, there may be estimated the difference $(D_2)$ between the disturbance load of the selected motor (38') when the reverse torque of the torque generating mechanism (35) is of the predetermined magnitude, and the disturbance load of the selected motor (38') when the reverse torque of the torque generating mechanism (35) is zero, and based on the second correlation, there may be estimated the difference $(D'_2)$ between the torque command of the selected motor (38') when the reverse torque of the torque generating mechanism (35) is of the predetermined magnitude, and the torque command of the selected motor (38') when the reverse torque of the torque generating mechanism (35) is zero. In accordance with these features, the predetermined load and the predetermined torque command can be obtained without causing bending or disconnection of the wire electrode (12).

In the second invention, there may further be provided the calculation step of successively calculating the radius $(R_2)$ of the wire bobbin (30) including the wire electrode (12) wound thereon based on the amount by which the wire electrode (12) is fed, and the torque generating mechanism control step of successively adjusting the predetermined load and the predetermined torque command to a constant magnitude by changing the predetermined torque of the torque generating mechanism (35) in accordance with the calculated radius $(R_2)$. In accordance with these features, in the estimation step, it is possible to continue to accurately estimate the tension of the wire electrode (12) while maintaining the predetermined load and the predetermined torque command constant.

In the second invention, there may further be included the calculation step of calculating the radius $(R_2)$ of the wire bobbin (30) including the wire electrode (12) wound thereon based on the amount by which the wire electrode (12) is fed, and successively calculating the predetermined load and the predetermined torque command in accordance with the calculated radius $(R_2)$. In accordance with this feature, in the estimation step, the tension of the wire electrode (12) can be continuously estimated with high accuracy while maintaining the reverse torque of the torque generating mechanism (35) at the predetermined magnitude.

In the feeding motor control step, two from among the disturbance load and the torque command of the first motor (38A) and the disturbance load and the torque command of the second motor (38B) may be acquired, in the estimation step, the tension based on one may be estimated, and there may be further estimated the tension based on another one, from among the disturbance load and the torque command of the first motor (38A), and the disturbance load and the torque command of the second motor (38B) that were acquired, and in the second invention, there may be further provided the abnormality estimation step of estimating whether or not an abnormality has occurred, based on whether or not a deviation between the two tensions estimated in the estimation step has exceeded the predetermined threshold value. In accordance with these features, it is possible to estimate whether or not an abnormality has occurred on the basis of the estimated tension.

**Claims**

1. A control device (16) for a wire electrical discharge machine (10) equipped with a wire bobbin (30) around which a wire electrode (12) is wound, a first roller (32A) configured to feed the wire electrode that is wound around the wire bobbin toward an object to be machined (25) by being rotated, a second roller (32B) configured to feed the wire electrode that has passed through the object to be machined to a collection box (24) by being rotated, a first motor (38A) configured to rotate the first roller, and a second motor (38B) configured to rotate the second roller, the control device for the wire electrical discharge machine further comprising:

an acquisition unit (58) configured to acquire at least one of a disturbance load or a torque command, the disturbance load being based on a drive current of a selected motor (38') which is one of the motors selected from among the first motor and the second motor, the torque command causing the selected motor to rotate at a predetermined command speed;

a feeding motor control unit (64) configured to control the first motor and the second motor in a manner so that the wire electrode is placed under tension between the first roller and the second roller; and

an estimation unit (60) configured to estimate a tension of the tensioned wire electrode, based on at least one of the disturbance load or the torque command which is acquired by the acquisition unit at a time when the wire electrode is placed under tension between the first roller and the second roller.

2. The control device for the wire electrical discharge machine according to claim 1, wherein the estimation unit estimates the tension, based on at least one of a difference ($D_1$) between the disturbance load at the time when the wire electrode is placed under tension and a predetermined load that is determined in advance, or a difference ($D'_1$) between the torque command at the time when the wire electrode is placed under tension and a predetermined torque command that is determined in advance.

3. The control device for the wire electrical discharge machine according to claim 2, wherein:

the predetermined load is the disturbance load of the selected motor, for a case in which the first motor and the second motor are rotated in a manner so that the wire electrode becomes bent between the first roller and the second roller; and

the predetermined torque command is the torque command of the selected motor, for a case in which the first motor and the second motor are rotated in a manner so that the wire electrode becomes bent between the first roller and the second roller.

4. The control device for the wire electrical discharge machine according to claim 2, wherein:

the predetermined load is the disturbance load of the selected motor, for a case in which the wire electrode, which is being fed while being tensioned between the first roller and the second roller, is disconnected; and

the predetermined torque command is the torque command of the selected motor, for a case in which the wire electrode, which is being fed while being tensioned between the first roller and the second roller, is disconnected.

5. The control device for the wire electrical discharge machine according to claim 2, wherein:

the wire electrical discharge machine further comprises a pinch roller (42) configured to apply a frictional force to the wire electrode by gripping the wire electrode together with the second roller;

the predetermined load is the disturbance load of the selected motor, for a case in which the pinch roller is separated away from the wire electrode which is being fed while being tensioned; and

the predetermined torque command is the torque command of the selected motor, for a case in which the pinch roller is separated away from the wire electrode which is being fed while being tensioned.

6. The control device for the wire electrical discharge machine according to claim 2, wherein:

the wire electrical discharge machine further comprises a torque generating mechanism (35) connected to the wire bobbin, and configured to generate a reverse torque of a predetermined magnitude, which is a torque in a direction opposite to the direction of rotation in which the wire electrode is fed out in the feeding direction;

in a case that each of the first motor and the second motor rotates at a constant rotational speed, the predetermined load is a difference ($D_2$) between the disturbance load of the selected motor when the reverse torque of the torque generating mechanism is of the predetermined magnitude, and the disturbance load of the selected motor when the reverse torque of the torque generating mechanism is zero; and

in a case that each of the first motor and the second motor rotate at a constant rotational speed, the predetermined torque command is a difference ($D'_2$) between the torque command of the selected motor when the reverse torque of the torque generating mechanism is of the predetermined magnitude, and the torque command of the selected motor when the reverse torque of the torque generating mechanism is zero.

7. The control device for the wire electrical discharge machine according to claim 6, further comprising a relationship specifying unit (68) configured to specify at least one of a first correlation, which is a correlation between the disturbance load and the reverse torque, or a second correlation, which is a correlation between the torque command and the reverse torque,

wherein the relationship specifying unit specifies the first correlation based on the disturbance load of the selected motor when the reverse torque of the torque generating mechanism is of a first magnitude, and the disturbance load of the selected motor when the reverse torque of the torque generating mechanism is of a second magnitude, and specifies the second correlation based on the torque command of the selected motor when the reverse torque of the torque generating mechanism is of a first magnitude, and the torque command of the selected motor when the reverse torque of the torque generating mechanism is of a second magnitude; and based on the first correlation, the estimation unit estimates the difference between the disturbance load of the selected motor when the reverse torque of the torque generating mechanism is of the predetermined magnitude, and the disturbance load of the selected motor when the reverse torque of the torque generating mechanism is zero, and based on the second correlation, estimates the difference between the torque command of the selected motor when the reverse torque of the torque generating mechanism is of the predetermined magnitude, and the torque command of the selected motor when the reverse torque of the torque generating mechanism is zero.

8. The control device for the wire electrical discharge machine according to claim 6 or 7, further comprising:

a calculation unit (62) configured to successively calculate a radius ($R_2$) of the wire bobbin including the wire electrode wound thereon based on an amount by which the wire electrode is fed; and a torque generating mechanism control unit (66) configured to successively adjust the predetermined load and the predetermined torque command to a constant magnitude by changing the predetermined torque of the torque generating mechanism in accordance with the calculated radius.

9. The control device for the wire electrical discharge machine according to any one of claims 1 to 7, further comprising a calculation unit (62) configured to calculate a radius ($R_2$) of the wire bobbin including the wire electrode wound thereon based on an amount by which the wire electrode is fed, and to successively calculate the predetermined load and the predetermined torque command in accordance with the calculated radius.

10. The control device for the wire electrical discharge machine according to any one of claims 1 to 8, wherein:

the acquisition unit acquires two from among the disturbance load and the torque command of the first motor, and the disturbance load and the torque command of the second motor; the estimation unit estimates the tension based on one, and further estimates the tension based on another one from among the disturbance load and the torque command of the first motor, and the disturbance load and the torque command of the second motor that were acquired; and the control device for the wire electrical discharge machine further comprises an abnormality estimation unit (70) configured to estimate whether or not an abnormality has occurred, based on whether or not a deviation between the two tensions estimated by the estimation unit has exceeded a predetermined threshold value.

11. An estimation method for estimating a tension of a wire electrode in a wire electrical discharge machine (10) equipped with a wire bobbin (30) around which a wire electrode (12) is wound, a first roller (32A) configured to feed the wire electrode that is wound around the wire bobbin toward an object to be machined by being rotated, a second roller (32B) configured to feed the wire electrode that has passed through the object to be machined to a collection box (24) by being rotated, a first motor (38A) configured to rotate the first roller, and a second motor (38B) configured to rotate the second roller, wherein the wire electrode is placed under tension between the first roller and the second roller, the estimation method comprising:

a feeding motor control step of acquiring at least one of a disturbance load or a torque command of a selected motor (38') which is one of the motors selected from among the first motor and the second motor, while controlling the first motor and the second motor in a manner so that the wire electrode is placed under tension between the first roller and the second roller, the disturbance load being based on a drive current of the selected motor, the torque command causing the selected motor to rotate at a predetermined command speed; and

an estimation step of estimating the tension, based on at least one of the disturbance load or the torque command at a time when the wire electrode is placed under tension between the first roller and the second roller.

**FIG. 1**

# FIG. 2

# FIG. 3

16

**CONTROL DEVICE**

| 52 | COMPUTATION UNIT | | STORAGE UNIT | 44 |
|---|---|---|---|---|
| | | | PREDETERMINED PROGRAM | 54 |

56 — MOTOR CONTROL UNIT

64 — FEEDING MOTOR CONTROL UNIT

66 — TORQUE MOTOR CONTROL UNIT

DISPLAY UNIT —46

OPERATION UNIT —48

58 — ACQUISITION UNIT

AMPLIFIERS —50

FIRST AMPLIFIER —50A

60 — ESTIMATION UNIT

SECOND AMPLIFIER —50B

62 — CALCULATION UNIT

THIRD AMPLIFIER —50C

# FIG. 4

FIG. 5

```
          ( START )
              │
              ▼
┌──────────────────────────────┐ S1
│ FEEDING MOTOR CONTROL STEP   │
└──────────────────────────────┘
              │
              ▼
┌──────────────────────────────┐ S2
│      CALCULATION STEP        │
└──────────────────────────────┘
              │
              ▼
┌──────────────────────────────┐ S3
│  TORQUE MOTOR CONTROL STEP   │
└──────────────────────────────┘
              │
              ▼
┌──────────────────────────────┐ S4
│      ESTIMATION STEP         │
└──────────────────────────────┘
              │
              ▼
           (  END  )
```

FIG. 6

DISTURBANCE LOAD

0

TORQUE OF TORQUE
GENERATING MECHANISM

$D_2$

$T'_{35}$

# FIG. 7

**16**

CONTROL DEVICE

52 — COMPUTATION UNIT

56 — MOTOR CONTROL UNIT

64 — FEEDING MOTOR CONTROL UNIT

66 — TORQUE MOTOR CONTROL UNIT

58 — ACQUISITION UNIT

60 — ESTIMATION UNIT

62 — CALCULATION UNIT

68 — RELATIONSHIP SPECIFYING UNIT

STORAGE UNIT — 44

PREDETERMINED PROGRAM — 54

DISPLAY UNIT — 46

OPERATION UNIT — 48

AMPLIFIERS — 50

FIRST AMPLIFIER — 50A

SECOND AMPLIFIER — 50B

THIRD AMPLIFIER — 50C

# FIG. 8

16

**CONTROL DEVICE**

52 — COMPUTATION UNIT

56 — MOTOR CONTROL UNIT

64 — FEEDING MOTOR CONTROL UNIT

66 — TORQUE MOTOR CONTROL UNIT

58 — ACQUISITION UNIT

60 — ESTIMATION UNIT

62 — CALCULATION UNIT

70 — ABNORMALITY ESTIMATION UNIT

STORAGE UNIT — 44

PREDETERMINED PROGRAM — 54

DISPLAY UNIT — 46

OPERATION UNIT — 48

AMPLIFIERS — 50

FIRST AMPLIFIER — 50A

SECOND AMPLIFIER — 50B

THIRD AMPLIFIER — 50C

## INTERNATIONAL SEARCH REPORT

International application No.

PCT/JP2021/010973

| A. CLASSIFICATION OF SUBJECT MATTER |
|---|
| Int. Cl. B23H7/10(2006.01)i |
| FI: B23H7/10 D |

According to International Patent Classification (IPC) or to both national classification and IPC

| B. FIELDS SEARCHED |
|---|

Minimum documentation searched (classification system followed by classification symbols)
Int. Cl. B23H7/10

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | WO 2014/068679 A1 (MITSUBISHI ELECTRIC CORP.) 08 May 2014, paragraphs [0011]-[0086], fig. 1-9 | 1, 11<br>9<br>2-5, 10 |
| Y | JP 4-183527 A (MITSUBISHI ELECTRIC CORP.) 30 June 1992, p. 2, lower right column to p. 3, upper right column, fig. 1 | 9 |
| A | WO 95/14548 A1 (FANUC LTD.) 01 June 1995, claims 1-8, fig. 1-3 | 1-11 |
| A | JP 5-312657 A (INR KENKYUSHO KK) 22 November 1993, claim 1, fig. 1 | 1-11 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13.04.2021 | 27.04.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

## INTERNATIONAL SEARCH REPORT
Information on patent family members

| | International application No. |
|---|---|
| | PCT/JP2021/010973 |

| Patent Documents referred to in the Report | Publication Date | Patent Family | Publication Date |
|---|---|---|---|
| WO 2014/068679 A1 | 08.05.2014 | US 2015/0290733 A1 paragraphs [0019]-[0094], fig. 1-9 CN 104768689 A | |
| JP 4-183527 A | 30.06.1992 | (Family: none) | |
| WO 95/14548 A1 | 01.06.1995 | EP 686452 A1 | |
| JP 5-312657 A | 22.11.1993 | (Family: none) | |

Form PCT/ISA/210 (patent family annex) (January 2015)

**EP 4 129 548 A1**

**Patent documents cited in the description**

- JP 2002340711 A